# EUROPÄISCHE PATENTSCHRIFT

(11) **EP 1 948 707 B1**
(45) Veröffentlichungstag und Bekanntmachung des Hinweises auf die Patenterteilung: **21.07.2010**
(21) Anmeldenummer: 06819450.5
(22) Anmeldetag: 14.11.2006
(51) Int. Cl.: C08F 261/04

(54) **SILAN-MODIFIZIERTE POLYVINYLALKOHOLE**
SILANE-MODIFIED POLYVINYL ALCOHOLS
ALCOOLS POLYVINYLIQUES MODIFIES AU SILANE

(30) Priorität: 17.11.2005 DE 102005054913
(43) Veröffentlichungstag der Anmeldung: 30.07.2008
(73) Patentinhaber: Wacker Chemie AG, 81737 München (DE)
(72) Erfinder: HASHEMZADEH, Abdulmajid, 84508 Burgkirchen (DE); FICKERT, Karl Ernst, 84503 Altötting (DE)
(74) Vertreter: Schuderer, Michael
(86) Internationale Anmeldenummer: PCT/EP2006/068422
(87) Internationale Veröffentlichungsnummer: WO 2007/057382

(56) Entgegenhaltungen:
- EP-A2- 0 187 040
- WO-A-2004/065437

## Beschreibung

Die Erfindung betrifft Silan-modifizierte Polyvinylalkohole, ein neues Verfahren zur Herstellung von Silan-modifizierten Polyvinylalkoholen, sowie deren Verwendung.

Polyvinylalkohol und Polyvinylalkoholcopolymerisate finden vielfältige Anwendungen als Bindemittel, als Schutzkolloid in Emulsions- und Suspensionspolymerisation, als Cobinder in Papierbeschichtungen, und als Sauerstoffbarriere in der Verpackungsindustrie. Durch die Modifizierung von Polyvinylalkohol mit Silangruppen erhält man höhere Festigkeiten und bessere Anbindung an Mineralstoffe wie Pigmente, Füllstoffe und Glas.

Silanmodifizierte Polyvinylalkohole wurden bisher mittels Copolymerisation von Vinylacetat und ethylenisch ungesättigtem Silan und anschließender Hydrolyse hergestellt, oder durch nachträgliche Silylierung der Vinylalkoholeinheiten von Polyvinylalkohol mit einem Silylierungsagens mit mindestens zwei hydrolisierbaren Gruppen. Die EP 0076490 A1 beschreibt ein Papierbeschichtungsmittel auf der Basis von silanisierten Polyvinylalkoholen, welche mittels der beiden genannten Verfahrensvarianten zugänglich sind. Die EP 1127706 A1 betrifft Inkjet-Aufzeichnungsmaterialien, welche eine Beschichtung mit silanfunktionellem Polyvinylalkohol aufweisen, wobei die dort eingesetzten silanisierten Polyvinylalkohole ebenfalls mit diesen beiden genannten Verfahrensvarianten zugänglich sind. Auch in der DE 3519575 C2, welche wärmeempfindliche Aufzeichnungsmaterialen mit einer Schutzschicht betrifft, werden die Alternativen Silylierung der Vinylalkohol-Einheiten oder Copolymerisation von Vinylacetat mit ethylenisch ungesättigten Silan und anschließende Hydrolyse, als geeignete Herstellverfahren genannt.

Die silanisierten Polyvinylalkohole aus der EP 1380599 A1 und der EP 1380600 werden mittels Copolymerisation von Vinylester und ethylenisch ungesättigten Silanen und anschließender Hydrolyse der silanisierten Polyvinylester erhalten, wobei gegebenenfalls in Gegenwart von Mercaptoverbindungen polymerisiert werden kann. Die EP 1080940 A2 beschreibt drei Alternativen zur Herstellung von silanisierten Polyvinylalkoholen: Vinylester wird mit olefinisch ungesättigten Monomeren mit Silylgruppe copolymerisiert und anschließend hydrolisiert. Vinylester wird mit epoxyfunktionellen Comonomeren copolymerisiert, das damit erhaltene Copolymer mit einer Verbindung umgesetzt, welche sowohl Mercapto- als auch Silyl-Gruppen erhält, und dann hydrolisiert. Vinylester wird in Gegenwart einer Verbindung mit Mercapto- und Silylgruppen copolymerisiert und anschließend hydrolisiert. Die WO 2004/013190 A1 beschreibt die Herstellung von silanmodifizierten Polyvinylalkoholen, wobei Vinylester in Gegenwart von silanhaltigen Aldehyden polymerisiert werden, und das damit erhaltene Vinylesterpolymerisat anschließend verseift wird.

Die genannten Verfahren sind alle relativ aufwändig, wobei es zudem mit zunehmenden Silankonzentrationen zur Gelbildung während der Synthese und zur Bildung wasserunlöslicher Produkte aufgrund der Nebenreaktion der Hydroxygruppen mit Aldehyd kommen kann.

Der Erfindung lag die Aufgabe zugrunde, Silan-modifizierte Polyvinylalkohole auf einfacherem Weg zur Verfügung zu stellen, wobei auch bei hoher Silankonzentration-Produkte mit guter Löslichkeit und Lagerstabilität resultieren sollten.

Gegenstand der Erfindung sind Silan-modifizierte Polyvinylalkohole, erhältlich durch Behandlung von Vinylalkoholpolymerisaten mit einem oder mehreren, ethylenisch ungesättigten, silanhaltigen Monomeren bei erhöhter Temperatur.

Geeignete Vinylalkoholpolymerisate sind teil- oder vollverseifte Vinylesterpolymerisate mit einen Hydrolysegrad von vorzugsweise 50 Mol-% bis 99,99 Mol-%, besonders bevorzugt von 70 Mol-% bis 99 Mol-%, am meisten bevorzugt von ≥ 96 Mol-%. Als vollverseift bezeichnet man dabei solche Polymerisate, deren Hydrolysegrad ≥ 96 Mol-% ist. Als teilverseifte Vinylesterpolymerisate sind solche zu verstehen, mit einem Hydrolysegrad > 50 Mol-% und < 96 Mol-%. Die Viskosität des Vinylalkoholpolymerisats (DIN 53015, Methode nach Höppler; 4 %-ige Lösung in Wasser) beträgt 1 bis 60 mPas, vorzugsweise 1 bis 10 mPas, und dient als Maß für das Molekulargewicht und für den Polymerisationsgrad der teil- oder vollverseiften Polyvinylalkohole.

Geeignete Vinylalkoholpolymerisate sind kommerziell erhältliche Polyvinylalkohole oder können mittels Polymerisation von Vinylester und anschließender Hydrolyse hergestellt werden.

Zur Herstellung der Vinylalkoholpolymerisate geeignete Vinylester sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexa-noat, Vinyllaurat, 1-Methylvinylacetat, Vinylpivalat und Vinylester von α-verzweigten Monocarbonsäuren mit 5 bis 13 C-Atomen, beispielsweise VeoVa9^{R} oder VeoVa10^{R} (Handelsnamen der Firma Shell). Besonders bevorzugt ist Vinylacetat.

Neben den Vinylester-Einheiten können gegebenenfalls noch ein oder mehrere Monomere aus der Gruppe umfassend Methacrylsäureester und Acrylsäureester von Alkoholen mit 1 bis 15 C-Atomen, Olefine, Diene, Vinylaromaten und Vinylhalogenide copolymerisiert sein. Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat. Geeignete Diene sind 1,3-Butadien und Isopren. Beispiele für polymerisierbare Olefine sind Ethen und Propen. Als Vinylaromaten können Styrol und Vinyltoluol einpolymerisiert werden. Aus der Gruppe der Vinylhalogenide werden üblicherweise Vinylchlorid, Vinylidenchlorid oder Vinylfluorid, vorzugsweise Vinylchlorid, eingesetzt. Der Anteil dieser Comonomere wird so bemessen, dass der Anteil an Vinylestermonomer > 50 Mol-% im Vinylester-Polymerisat beträgt.

Gegebenenfalls können noch weitere Comonomere in einem Anteil von vorzugsweise 0,02 bis 20 Gew.-%, bezogen auf das Gesamtgewicht des Vinylester-Polymerisats enthalten sein. Beispiele hierfür sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise N-Vinylformamid, Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propan-sulfonsäure. Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Die Vinylester-Polymerisate können in bekannter Weise mittels Polymerisation hergestellt werden; vorzugsweise durch Substanzpolymerisation, Suspensionspolymerisation oder durch Polymerisation in organischen Lösungsmitteln, besonders bevorzugt in alkoholischer Lösung. Geeignete Lösungsmittel und Regler sind beispielsweise Methanol, Ethanol, Propanol, Isopropanal. Die Polymerisation wird unter Rückfluß bei einer Temperatur von 50°C bis 100°C durchgeführt und durch Zugabe gängiger Initiatoren radikalisch initiiert. Beispiele für gängige Initiatoren sind Percarbonate wie Cyclohexylperoxidicarbonat oder Perester wie t-Butylperneodecanoat oder t-Butylperpivalat.

Die Einstellung des Molekulargewichts kann in bekannter Weise durch den Lösungsmittelgehalt, durch Variation der Initiatorkonzentration, durch Variation der Temperatur, und durch Zugabe von Reglern erfolgen. Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Die Verseifung der Vinylester-Polymerisate zu Polyvinylalkoholen kann in an sich bekannter Weise erfolgen, zum Beispiel nach dem Band- oder Kneterverfahren, im Alkalischen oder Sauren unter Zugabe von Säure oder Base. Vorzugsweise wird das Polyvinylester-Festharz in Alkohol, beispielweise Methanol, unter Einstellen eines Feststoffgehalts von 15 bis 70 Gew.-% aufgenommen: Bevorzugt wird die Hydrolyse im Basischen durchgeführt, beispielsweise durch Zugabe von NaOH, KOH oder NaOCH₃. Die Base wird im allgemeinen in einer Menge von 1 bis 5 Mol-% pro Mol Ester-Einheiten eingesetzt. Die Hydrolyse wird bei Temperaturen von 30°C bis 70°C durchgeführt. Nach Abschluß der Hydrolyse wird das Lösungsmittel abdestilliert und der Polyvinylalkohol wird als Pulver erhalten. Der Polyvinylalkohol kann aber auch durch eine sukzessive Zugabe von Wasser, während das Lösungsmittel abdestilliert wird, als wässrige Lösung gewonnen werden.

Zur Modifizierung geeignete ethylenisch ungesättigte, silanhaltige Monomere sind beispielsweise ethylenisch ungesättigte Siliciumverbindungen der allgemeinen Formel R¹SiR²₀₋₂(OR³)₁₋₃, wobei R¹ die Bedeutung CH₂=CR⁴-(CH₂)₀₋₁ oder CH₂=CR⁴CO₂(CH₂)₁₋₃ hat, R² die Bedeutung C₁- bis C₃-Alkylrest, C₁- bis C₃-Alkoxyrest oder Halogen, vorzugsweise Cl oder Br hat, R³ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R³ gegebenenfalls durch eine Ethergruppe unterbrochen sein kann, und R⁴ für H oder CH₃ steht.

Bevorzugte ethylenisch ungesättigte, silanhaltige Monomere sind γ-Acryl- bzw. γ-Methacryloxypropyltri(alkoxy)silane, α-Methacryloxymethyltri(alkoxy)silane, γ-Methacryloxypropyl-methyldi(alkoxy)silane; Vinylsilane wie Vinylalkyldi(alkoxy)-silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für bevorzugte silanhaltige Monomere sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)-silan, Vinyltrichorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Vinylsilane.

Als ethylenisch ungesättigte, silanhaltige Monomere werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyltris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

Geeignete ethylenisch ungesättigte, silanhaltige Monomere sind auch Silan-Gruppen enthaltene (Meth)acrylamide, der allgemeinen Formel CH₂= CR⁵-CO-NR⁶-R⁷-SiR⁸ₙ-(R⁹)₃₋ₘ, wobei n= 0 bis 4, m= 0 bis 2, R⁵ entweder H oder eine Methyl-Gruppe ist, R⁶ H ist oder eine Alkyl-Gruppe mit 1 bis 5 C-Atomen ist; R⁷ eine Alkylen-Gruppe mit 1 bis 5 C-Atomen oder eine bivalente organische Gruppe in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen ist, welche mit weiteren Heterocyclen substituiert sein können. In Monomeren, in denen 2 oder mehrere R⁵ oder R⁹- Gruppen vorkommen, können diese identisch oder unterschiedlich sein.

Beispiele für solche (Meth)acrylamido-alkylsilane sind: 3-(Meth)acrylamido-propyltrimethoxysilan, 3-(Meth)acrylamido-propyltriethoxysilan, 3-(Meth)acrylamido-propyltri(β-methoxy-ethoxy)silan, 2-(Meth)acrylamido-2-methylpropyltrimethoxy-silan, 2-(Meth)acrylamido-2-methylethyltrimethoxysilan, N-(2-(Meth)acrylamido-ethyl)aminopropyltrimethoxysilan, 3-(Meth)-acrylamido-propyltriacetoxysilan, 2-(Meth)acrylamido-ethyltrimethoxysilan, 1-(Meth)acrylamido-methyltrimethoxysilan, 3-(Meth)acrylamido-propylmethyldimethoxysilan, 3-(Meth)acryl-amido-propyldimethylmethoxysilan, 3-(N-Methyl-(Meth)acryl-amido)-propyltrimethoxysilan, 3-((Meth)acrylamido-methoxy)-3-hydroxypropyltrimethoxysilan, 3-((Meth)acrylamido-methoxy)-propyltrimethoxysilan, N,N-Dimethyl-N-trimethoxysilylpropyl-3-(Meth)acrylamido-propylammoniumchlorid und N-N-Dimethyl-N-tri-methoxysilylpropyl-2-(Meth)acrylamido-2-methylpropylammonium-chlorid.

Die ethylenisch ungesättigten, silanhaltigen Monomere werden vorzugsweise in einer Menge von 0,01 bis 40 Gew.-%, besonders bevorzugt 1,0 bis 25 Gew.-%, jeweils bezogen auf das Gewicht des Vinylalkohol-Polymerisats, eingesetzt.

Zur Herstellung der Silan-modifizierten Polyvinylalkohole wird zunächst das Vinylalkohol-Polymerisat in Lösung vorgelegt. Vorzugsweise wird das Vinylalkohol-Polymerisat in Wasser oder einem Wasser/Alkohol-Gemisch gelöst. Geeignete Alkohole sind beispielsweise Methanol, Ethanol, Propanol, Isopropanol. Die ethylenisch ungesättigten, silanhaltigen Monomere können insgesamt vorgelegt werden, insgesamt zudosiert werden oder in Anteilen vorgelegt werden und der Rest nach der Initiierung der Modifizierung zudosiert werden. Vorzugsweise wird bei relativ geringer Konzentration der silanhaltigen Monomere, vorzugsweise bis zu 20 Gew.-% silanhaltige Monomere, bezogen auf das Vinylalkohol-Polymerisat, die Gesamtmenge an silanhaltigem Monomer vorgelegt und der Intitiator zudosiert, oder der Initiator vorgelegt und die Gesamtmenge an silanhaltigem Monomer zudosiert. Bei höheren Monomerkonzentrationen, vorzugsweise größer 20 Gew.-% silanhaltige Monomere bezogen auf Vinylalkohol-Polymerisat, werden die silanhaltigen Monomere und der Initiator teilweise vorgelegt und der Rest jeweils zudosiert. Die Modifizierung erfolgt bei erhöhter Temperatur, das heißt bei Temperaturen von ≥ 30°C, und wird bevorzugt durch Zugabe gängiger Initiatoren radikalisch initiiert. Vorzugsweise erfolgt die Modifizierung bei einer Temperatur von 50°C bis 100°C. Bevorzugt ist der Anteil an Initiator von 0,1 bis 10,0 Gew.-% bezogen auf die Menge der insgesamt eingesetzten silanhaltigen Monomere. Beispiele für gängige Initiatoren sind Peroxodisulfate wie Kaliumperoxodisulfat und Amoniumperoxodisulfat.

Die damit erhaltenen Silan-modifizierten Polyvinylalkohole können in Lösung verwendet werden. Die Silan-modifizierten Polyvinylalkohole können aber auch in bekannter Weise mittels Fällung, Destillation oder Trocknung, beispielsweise Sprühtrocknung, isoliert werden und als Feststoff verwendet werden. Besonders vorteilhaft ist, dass die erfindungsgemäßen Silanmodifizierten Polyvinylalkohole hohe Lagerstabilität selbst bei relativ hohem Silangehalt zeigen. Während konventionelle Silan-modifizierte Polyvinylalkohole, welche mittels Copolymerisation von ethylenisch ungesättigtem Silan mit Vinylester und anschließender Hydrolyse erhalten werden, bereits bei einem Gehalt an silanfunktionellen Comonomereinheiten von 2 Gew.-% zur Gelierung neigen, sind die erfindungsgemäßen Silan-modifizierten Polyvinylalkohole selbst bei Modifizierung mit bis zu 40 Gew.-% an silanhaltigen Monomeren lagerstabil.

Vorteilhafterweise sind die Silan-modifizierten Polyvinylalkohole durch das erfindungsgemäße Verfahren in farbloser Form zugänglich. Das Auftreten von Verfärbungen oder Vergilbung im Zuge der Modifizierung von Polyvinylalkoholpolymerisaten mit ethylenisch ungesättigten Silan-Monomeren kann also unterbunden werden. Erreicht wird dies durch die erfindungsgemäße Auswahl der Reaktionsbedingungen, insbesondere durch Anwendung der erfindungsgemäßen Reaktionstemperaturen sowie gegebenenfalls durch Einsatz erfindungsgemäßer Mengen an Initiatoren.

Die Silan-modifizierten Polyvinylalkohole eignen sich zur Verwendung in den für Polyvinylalkohole typischen Anwendungsgebieten. Die Silan-modifizierten Polyvinylalkohole eignen sich als Bindemittel oder Cobinder für Beschichtungsmittel und Klebemittel. Besonders geeignet sind die Silan-modifizierten Polyvinylalkohole als Bindemittel in Papierbeschichtungen, insbesondere für Inkjet-Papiere. Die Silan-modifizierten Polyvinylalkohole eignen sich auch als Schutzkolloide, beispielsweise für wässrige Dispersionen und bei der Umsetzung in wässrigem Medium, und bei der Herstellung von in Wasser redispergierbaren Dispersionspulvern. Weitere Einsatzgebiete sind die Behandlung von Pigmenten und Füllstoffen und der Einsatz als Bindemittel in der Keramikindustrie. Weitere Anwendungen sind die in der Kosmetik, insbesondere Haarkosmetik, sowie als Bindemittel in der Lebensmittelverpackung und Textilindustrie.

### Beispiel 1:

In einer thermostatisierten Laborapparatur mit 2,5 Liter Füllvolumen wurden unter Stickstoff 1000 g einer 20 %-igen wässrigen Polyvinylalkohollösung (Mowiol 8-88, Firma Kuraray Specialities Europe) vorgelegt und unter Rühren auf 90°C aufgeheizt. Bei dieser Temperatur wurde 2 h gerührt und anschließend die Temperatur auf 80°C reduziert und 15 g Vinyltriethoxysilan (Geniosil GF 56, Firma Wacker Chemie) zur Polyvinylalkohollösung zugegeben. Nach 15 min Homogenisierung wurde die Reaktion durch die Zugabe von 10 g einer 3 %-igen wässrigen Kaliumperoxodisulfatlösung gestartet. Die Temperatur wurde 4 h bei 80°C gehalten und anschließend wurde der Ansatz abgekühlt. Es wurde eine klare Polymerlösung mit einem Feststoffgehalt von 21 Gew.-% und mit 7,0 Gew.-% Silananteil bezogen auf das Gesamtgewicht der Silan-modifizierten Polyvinylalkohole erhalten.

### Beispiel 2:

In einer thermostatisierten Laborapparatur mit 2,5 Liter Füllvolumen wurden unter Stickstoff 1000 g einer 20 %-igen wässrigen Polyvinylalkohollösung (Mowiol 8-88, Firma Kuraray Specialities Europe) vorgelegt und unter Rühren auf 90°C aufgeheizt. Bei dieser Temperatur wurde 2 h gerührt und anschließend die Temperatur auf 80°C reduziert und 36 g Vinyltriethoxysilan (Geniosil GF 56, Firma Wacker Chemie) zur Polyvinylalkohollösung zugegeben. Nach 15 min Homogenisierung wurde die Reaktion durch die Zugabe von 30 g einer 3 %-igen wässrigen Kaliumperoxodisulfatlösung gestartet (Dosierzeit 20 min). Die Temperatur wurde 4 h bei 80°C gehalten und anschließend wurde der Ansatz abgekühlt. Es wurde eine klare Polymerlösung mit einem Feststoffgehalt von 22 Gew.-% und mit 15,0 Gew.-% Silananteil bezogen auf das Gesamtgewicht der Silan-modifizierten Polyvinylalkohole erhalten.

### Beispiel 3:

In einer thermostatisierten Laborapparatur mit 2,5 Liter Füllvolumen wurden unter Stickstoff 1000 g 20 %-ige wässrige Polyvinylalkohollösung (Mowiol 8-88, Firma Kuraray Specialities Europe) vorgelegt und auf 90°C unter Rühren aufgeheizt. Bei dieser Temperatur wurde 2 h gerührt und anschließend die Temperatur auf 80°C reduziert und 51 g Vinyltriethoxysilan (Geniosil GF 56, Firma Wacker Chemie) zur Polyvinylalkohollösung zugegeben. Nach 15 min Homogenisierung wurde die Reaktion durch die Zugabe von 40g einer 3 %-igen wässrigen Kaliumperoxodisulfatlösung gestartet (Dosierzeit 30 min). Die Temperatur wurde 4 h bei 80°C gehalten und anschließend wurde der Ansatz abgekühlt. Es wurde eine leicht trübe Polymerlösung mit einem Feststoffgehalt von 23 Gew.-% und mit 20,0 Gew.-% Silananteil bezogen auf das Gesamtgewicht der Silan-modifizierten Polyvinylalkohole erhalten.

### Beispiel 4:

In einer thermostatisierten Laborapparatur mit 2,5 Liter Füllvolumen wurden unter Stickstoff 1000 g einer 20 %-igen wässrigen Polyvinylalkohollösung (Mowiol 8-88, Firma Kuraray Specialities Europe) vorgelegt und unter Rühren auf 90°C aufgeheizt. Bei dieser Temperatur wurde 2 h gerührt und anschließend die Temperatur auf 80°C reduziert, und es wurden 15 g Vinyltriethoxysilan (Geniosil GF 56, Firma Wacker Chemie) zur Polyvinylalkohollösung zugegeben. Nach 15 min Homogenisierung wurde die Reaktion durch die Zugabe von 10 g einer 3 %-igen wässrigen Kaliumperoxodisulfatlösung gestartet. Die Temperatur wurde 4 h bei 80°C gehalten und anschließend die Temperatur auf 40°C reduziert und der pH-Wert mit Ammoniak auf 9 eingestellt und 2 Stunden gerührt. Nach der Abkühlung wurde der pH-Wert mit Salzsäure auf 5 eingestellt. Es wurde eine klare Polymerlösung mit einem Feststoffgehalt von 20 Gew.-% und mit 7,0 Gew.-%, bezogen auf das Gesamtgewicht der Silan-modifizierten Polyvinylalkohole, Silananteil erhalten.

### Vergleichsbeispiel 5:

Vorlage:

| | |
|---|---|
| 8,4 g | Vinyltriethoxysilan |
| 1,192 g | Vinylacetat |
| 240 g | Methanol |
| 0,35 g | tert.Butylperoxy-pivalat (75 %-ig) |

Die Vorlage wurde unter Stickstoff und Rühren (95 UpM) aufgeheizt und unter Rückfluss (57°C - 60°C) polymerisiert. 60 min und 120 min nach Rückfluss wurden je 0,64 g tert.Butylperoxy-pivalat zugesetzt. 180 min nach Rückfluss wurden 400 g Methanol dem Reaktor zugesetzt und noch für weitere 4 Stunden bei Rückfluss gerührt und anschließend die Polymerlösung abgekühlt.

Die erhaltenen Harzlösungen wurden nach folgender Rezeptur zum Polyvinylalkohol verseift:
1280 g einer auf 34 Gew.% Festgehalt eingestellten Harzlösung wurden mit 87 g Methanol überschichtet.Dann wurde nach Zugabe von 96 g einer 4,5 %-igen methanolischen NaOH-Lösung bei 30°C mit dem Rühren (200 UpM) begonnen. Nach 120 Minuten wurde die Verseifung mit Essigsäure (Einstellen auf pH 7) abgebrochen. Das ausgefallene Vinylalkoholcopolymer wurde abfiltriert, mit Methanol gewaschen und getrocknet. Das erhaltene Silan-modifizierte Polyvinylalkohol hatte eine Höpplerviskosität von 7,5 mPa.s.

### Vergleichsbeispiel 6:

Es wurde analog zu Beispiel 1 verfahren mit dem Unterschied, dass 126 g der 3%-igen wässrigen Kaliumperoxodisulfatlösung eingesetzt wurden.

Es wurde eine stark vergilbte Polymerlösung mit einem Feststoffgehalt von 17,5 Gew.-% erhalten.

Testung von Silan-modifizierten Polyvinylalkoholen in Tintenstrahlaufzeichnungsschichten:

| Rezeptur Streichmasse: | |
|---|---|
| Gefällte Kieselsäure | 100 Gew.-Teile |
| Si-PVAL aus Beispiel 1 | 28 Gew.-Teile |
| Kationisches Dispergiermittel | 5 Gew.-Teile |
| Polymerdispersion | 12 Gew.-Teile |

Festgehalt der Streichmasse: 30 Gew.-%

### Rohpapier:

Geleimtes Papier ca. 80 g/m² ; Strichauftrag ca. 15 g/m²

### Austestung:

### Scheuertest:

Ein 4.5 cm breiter und 19 cm langer mit der Streichmasse bestrichener Papierstreifen wurde in einem Scheuerprüfer der Fa. Prüfbau (System Dr. Dürner) mit einem auf einen Stempel (500 g) aufgebrachten schwarzen Tonzeichenpapier mit 50 Hüben bearbeitet. Das resultierende schwarze Papier wurde danach optisch beurteilt, wobei die Note 1 das Optimum darstellt.

### Weißgrad:

Der Weißgrad wurde mittels Remissionsmessung mit einem Filter (R 457) bestimmt und optisch beurteilt, wobei die Note 1 das Optimum darstellt.

### Lagerstabilität:

Die Lagerstabilität wurde getestet, indem jeweils eine 18 %-ige wässrige Lösung des Silan-modifizierten Polyvinylalkohols bei einem pH-Wert von 5 bis zu 14 Tagen gelagert worden ist, und die Höppler-Viskosität (nach DIN 53015 als 4 Gew.-%-ige wässrige Lösung) bestimmt worden ist.

Die Ergebnisse sind in Tabelle 1 zusammengefasst.

**Tabelle 1:**

| Beispiel | Weiß-grad optisch | Weiß-grad R 457 | Scheuer-test | Höppler-Viskosität nach 1 Tag | Höppler-Viskosität nach 14 Tagen |
|---|---|---|---|---|---|
| Bsp. 1 | 1 | 5,3 | 1 | 8,2 | 8,6 |
| Bsp. 4 | 1 | 4,9 | 1 | 7,9 | 8,3 |
| Vbsp. 5 | 1 | 5,2 | 1 | 7,5 | Geliert |

### Testung des Einsatzes in Trennrohpapieren:

### Herstellung des Papiers:

Die Grundierung (Lösung des entsprechenden Silan-modifizierten Polyvinylalkohols) wurde mittels einer Laborleimpresse auf ein Rohpapier aufgetragen und entsprechend getrocknet (Strichgewicht 1.5 g/m² bis 3 g/m²). Auf das so grundierte Papier wurde eine Trennschicht aus 100 Gew.-Teilen eines vinylterminierten Polysiloxans (Dehesive 920), 2.4 Gew.-Teilen eines H-haltigen Siloxans (Vernetzer V90) und 1 Gew.-Teil Pt-Katalysator (Katalysator OL) aufgetragen und das beschichtete Papier bei 150°C für 7 Sekunden getempert.

### Testmethoden:

### Migrations-Prüfung:

Es wurde ein Testklebeband auf die frisch silikonisierte Seite aufgebracht und anschließend wieder abgezogen. Der Klebestreifen wurde so zusammengefaltet, dass sich die klebenden Oberflächen berührten. Dann wurden die Enden auseinandergezogen (Loop-Test). Weisen die aufeinander klebenden Schichten eine gute Adhäsion auf, spricht dies für eine gute Haftung der Silikonschicht auf dem Substrat. Die Benotung beider Tests erfolgt in Schulnoten von 1 bis 6: 1 = sehr gut, 6 = sehr schlecht

### Rub Off:

Man reibt einmal mit dem Finger kräftig über die silikonisierte Oberfläche und betrachtet diese Stelle in schräg einfallendem Licht. Treten an dieser Stelle Helligkeitsunterschiede oder Streifen auf, haftet das Siliconprodukt nicht optimal. Zudem reibt man die Silikonschicht mehrmals stark mit dem Finger und beobachtet die Menge der Abriebsteilchen. Die Benotung beider Tests erfolgt in Schulnoten von 1 bis 6.

Die Ergebnisse sind in Tabelle 2 zusammengefasst:

**Tabelle 2:**

| Beispiele | Migration | Rub-Off |
|---|---|---|
| Bsp. 2 | 1 | 1 |
| Bsp. 3 | 1 | 2 |
| Vbsp. 5 | 2 | 1 |

## Patentansprüche

1. Silan-modifizierte Polyvinylalkohole, erhältlich durch Behandlung von Vinylalkoholpolymerisaten mit einem oder mehreren, ethylenisch ungesättigten, silanhaltigen Monomeren bei erhöhter Temperatur, in Gegenwart von 0,1 bis 10,0 Gew.-% initiator, bezogen auf die Menge der insgesamt eingesetzten silanhaltigen Monomere.

2. Silan-modifizierte Polyvinylalkohole nach Anspruch 1, **dadurch gekennzeichnet, dass** als Vinylalkoholpolymerisate teil- oder vollverseifte Vinylesterpolymerisate mit einen Hydrolysegrad von 50 Mol-% bis 99,99 Mol-% verwendet wird.

3. Silan-modifizierte Polyvinylalkohole nach Anspruch 1 oder 2, **dadurch gekennzeichnet, dass** die Behandlung von Vinylalkoholpolymerisaten mit einem oder mehreren, ethylenisch ungesättigten, silanhaltigen Monomeren bei Temperaturen zwischen 50°C und 100°C erfolgt.

4. Silan-modifizierte Polyvinylalkohole nach Anspruch 1 bis 3, **dadurch gekennzeichnet, dass** Vinylalkoholpolymerisate mit einer Viskosität von 1 bis 60 mPas (DIN 53015, Methode nach Höppler; 4 %-ige Lösung in Wasser) verwendet werden.

5. Silan-modifizierte Polyvinylalkohole nach Anspruch 1 bis 4, **dadurch gekennzeichnet, dass** ein oder mehrere ethylenisch ungesättigte, silanhaltige Monomere eingesetzt werden, aus der Gruppe umfassend ethylenisch ungesättigte Siliciumverbindungen der allgemeinen Formel R¹SiR²₀₋₂(OR³)₁₋₃, wobei R¹ die Bedeutung CH₂=CR⁴-(CH₂)₀₋₁ oder CH₂=CR⁴CO₂(CH₂)₁₋₃ hat, R² die Bedeutung C₁- bis C₃-Alkylrest, C₁- bis C₃-Alkoxyrest oder Halogen hat, R³ ein unverzweigter oder verzweigter, gegebenenfalls substituierter Alkylrest mit 1 bis 12 C-Atomen ist oder ein Acylrest mit 2 bis 12 C-Atomen ist, wobei R³ gegebenenfalls durch eine Ethergruppe unterbrochen sein kann, und R⁴ für H oder CH₃ steht.

6. Silan-modifizierte Polyvinylalkohole nach Anspruch 1 bis 4, **dadurch gekennzeichnet, dass** ein oder mehrere ethylenisch ungesättigte, silanhaltige Monomere eingesetzt werden, aus der Gruppe umfassend Silan-Gruppen enthaltene (Meth)acrylamide der allgemeinen Formel CH₂=CR⁵-CO-NR⁶-R⁷-SiR⁸ₙ-(R⁹)₃₋ₘ , wobei n = 0 bis 4, m = 0 bis 2, R⁵ entweder H oder eine Methyl-Gruppe ist, R⁶ H ist oder eine Alkyl-Gruppe mit 1 bis 5 C-Atomen ist, R⁷ eine Alkylen-Gruppe mit 1 bis 5 C-Atomen oder eine bivalente organische Gruppe, in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen ist, welche mit weiteren Heterocyclen substituiert sein können.

7. Silan-modifizierte Polyvinylalkohole nach Anspruch 1 bis 6, **dadurch gekennzeichnet, dass** 2,5 bis 40 Gew.-% ethylenisch ungesättigte, silanhaltige Monomere, bezogen auf das Gewicht des Vinylalkohol-Polymerisats, eingesetzt werden.

8. Verfahren zur Herstellung von Silan-modifizierten Polyvinylalkoholen gemäß Anspruch 1 bis 7 durch Behandlung von Vinylalkoholpolymerisaten in wässriger Lösung mit einem oder mehreren, ethylenisch ungesättigten, silanhaltigen Monomeren bei erhöhter Temperatur, in Gegenwart von 0,1 bis 10,0 Gew.-% initiator, bezogen auf die Menge der insgesamt eingesetzten silanhaltigen Monomere.

9. Verwendung der der Silan-modifizierten Polyvinylalkohole gemäß Anspruch 1 bis 7 als Bindemittel oder Cobinder für Beschichtungsmittel und Klebemittel.

10. Verwendung gemäß Anspruch 9 in Papierbeschichtungen.

11. Verwendung der Silan-modifizierten Polyvinylalkohole gemäß Anspruch 1 bis 7 als Schutzkolloide für wässrige Dispersionen, bei der Polymerisation in wässrigem Medium und bei der Herstellung von in Wasser redispergierbaren Dispersionspulvern.

12. Verwendung der Silan-modifizierten Polyvinylalkohole gemäß Anspruch 1 bis 7 zur Behandlung von Pigmenten und Füllstoffen und als Bindemittel in der Keramikindustrie.

13. Verwendung der Silan-modifizierten Polyvinylalkohole gemäß Anspruch 1 bis 7 in der Kosmetik, sowie als Bindemittel in der Lebensmittelverpackung und Textilindustrie.

## Claims

1. Silane-modified polyvinyl alcohols obtainable by treating vinyl alcohol polymers with one or more ethylenically unsaturated, silane-containing monomers at elevated temperature, in the presence of 0.1 to 10.0% by weight of initiator based on the total amount of silane-containing monomers used.

2. Silane-modified polyvinyl alcohols according to Claim 1, **characterized in that** the vinyl alcohol polymers used are partly or fully hydrolysed vinyl ester polymers having a degree of hydrolysis of 50 mol% to 99.99 mol%.

3. Silane-modified polyvinyl alcohols according to Claim 1 or 2, **characterized in that** the treatment of vinyl alcohol polymers with one or more ethylenically unsaturated, silane-containing monomers is effected at temperatures between 50°C and 100°C.

4. Silane-modified polyvinyl alcohols according to Claim 1 to 3, **characterized in that** vinyl alcohol polymers having a viscosity of 1 to 60 mPas (DIN 53015, Höppler method; 4% solution in water) are used.

5. Silane-modified polyvinyl alcohols according to Claim 1 to 4, **characterized in that** one or more ethylenically unsaturated, silane-containing monomers are used from the group comprising ethylenically unsaturated silicon compounds of the general formula R¹SiR²₀₋₂(OR³)₁₋₃ where R¹ is CH₂=CR⁴-(CH₂)₀₋₁ or CH₂=CR⁴CO₂(CH₂)₁₋₃, R² is a C₁- to C₃-alkyl radical, C₁- to C₃-alkoxy radical or halogen, R³ is an unbranched or branched, optionally substituted alkyl radical having 1 to 12 carbon atoms or is an acyl radical having 2 to 12 carbon atoms, where R³ may optionally be interrupted by an ether group, and R⁴ is H or CH₃.

6. Silane-modified polyvinyl alcohols according to Claim 1 to 4, **characterized in that** one or more ethylenically unsaturated, silane-containing monomers are used from the group comprising (meth)acrylamides which contain silane groups and are of the general formula CH₂=CR⁵-CO-NR⁶-R⁷-SiR⁸ₙ-(R⁹)₃₋ₘ where n = 0 to 4, m = 0 to 2, R⁵ is either H or a methyl group, R⁶ is H or is an alkyl group having 1 to 5 carbon atoms, R⁷ is an alkylene group having 1 to 5 carbon atoms or a bivalent organic group in which the carbon chain is interrupted by an oxygen or nitrogen atom, R⁸ is an alkyl group having 1 to 5 carbon atoms, R⁹ is an alkoxy group which has 1 to 40 carbon atoms and may be substituted by further heterocycles.

7. Silane-modified polyvinyl alcohols according to Claim 1 to 6, **characterized in that** 2.5 to 40% by weight of ethylenically unsaturated, silane-containing monomers, based on the weight of the vinyl alcohol polymer, are used.

8. Process for preparing silane-modified polyvinyl alcohols according to Claim 1 to 7 by treating vinyl alcohol polymers in aqueous solution with one or more ethylenically unsaturated, silane-containing monomers at elevated temperature, in the presence of 0.1 to 10.0% by weight of initiator based on the total amount of silane-containing monomers used.

9. Use of the silane-modified polyvinyl alcohols according to Claim 1 to 7 as a binder or cobinder for coating compositions and adhesive compositions.

10. Use according to Claim 9 in paper coatings.

11. Use of the silane-modified polyvinyl alcohols according to Claim 1 to 7 as protective colloids for aqueous dispersions, in polymerization in aqueous medium and in preparation of dispersion powders redispersible in water.

12. Use of the silane-modified polyvinyl alcohols according to Claim 1 to 7 for the treatment of pigments and fillers and as a binder in the ceramics industry.

13. Use of the silane-modified polyvinyl alcohols according to Claim 1 to 7 in cosmetics, and as a binder in foods packaging and in the textile industry.

## Revendications

1. Poly(alcool vinylique)s modifiés par un silane, pouvant être obtenus par traitement de polymères d'alcool vinylique par un ou plusieurs monomères silanés, à insaturation éthylénique, à température élevée, en présence de 0,1 à 10,0 % en poids d'amorceur, par rapport à la quantité des monomères silanés utilisés en totalité.

2. Poly(alcool vinylique)s modifiés par un silane selon la revendication 1, **caractérisés en ce qu'**on utilise comme polymères d'alcool vinylique des polymères d'ester vinylique partiellement ou totalement saponifiés ayant un degré d'hydrolyse de 50 % en moles à 99,99 % en moles.

3. Poly(alcool vinylique)s modifiés par un silane selon la revendication 1 ou 2, **caractérisés en ce que** le traitement des polymères d'alcool vinylique par un ou plusieurs monomères silanés, à insaturation éthylénique, s'effectue à des températures comprises entre 50 °C et 100 °C.

4. Poly(alcool vinylique)s modifiés par un silane selon les revendications 1 à 3, **caractérisés en ce qu'**on utilise des polymères d'alcool vinylique ayant une viscosité de 1 à 60 mPa.s (DIN 53015, méthode selon Höppler ; solution à 4 % dans de l'eau).

5. Poly(alcool vinylique)s modifiés par un silane selon les revendications 1 à 4, **caractérisés en ce qu'**on utilise un ou plusieurs monomères silanés, à insaturation éthylénique, choisis dans le groupe comprenant des composés siliciés à insaturation éthylénique de formule générale R¹SiR²₀₋₂(OR³)₁₋₃, où R¹ représente CH₂=CR⁴- (CH₂)₀₋₁ ou CH₂=CR⁴CO₂(CH₂)₁₋₃, R² représente un radical alkyle en C₁-C₃, un radical alcoxy en C₁-C₃ ou un atome d'halogène, R³ est un radical alkyle ramifié ou non ramifié, éventuellement substitué, ayant de 1 à 12 atomes de carbone ou est un radical acyle ayant de 2 à 12 atomes de carbone, R³ pouvant éventuellement être interrompu par un groupe éther, et R⁴ représente H ou CH₃.

6. Poly(alcool vinylique)s modifiés par un silane selon les revendications 1 à 4, **caractérisés en ce qu'**on utilise un ou plusieurs monomères silanés, à insaturation éthylénique, choisis dans le groupe comprenant des (méth)acrylamides contenant des groupes silane, de formule générale CH₂=CR⁵-CO-NR⁶-R⁷-SiR⁸ₙ-(R⁹)₃₋ₘ, où n = 0 à 4, m = 0 à 2, R⁵ est soit H, soit un groupe méthyle, R⁶ est H ou un groupe alkyle ayant de 1 à 5 atomes de carbone, R⁷ est un groupe alkylène ayant de 1 à 5 atomes de carbone ou un groupe organique divalent, dans lequel la chaîne carbonée est interrompue par un atome d'oxygène ou d'azote, R⁸ est un groupe alkyle ayant de 1 à 5 atomes de carbone, R⁹ est un groupe alcoxy ayant de 1 à 40 atomes de carbone, qui peuvent être substitués par d'autres hétérocycles.

7. Poly(alcool vinylique)s modifiés par un silane selon les revendications 1 à 6, **caractérisés en ce qu'**on utilise de 2,5 à 40 % en poids de monomères silanés, à insaturation éthylénique, par rapport au poids du polymère d'alcool vinylique.

8. Procédé pour la préparation de poly(alcool vinylique)s modifiés par un silane selon les revendications 1 à 7, par traitement de polymères d'alcool vinylique en solution aqueuse par un ou plusieurs monomères silanés, à insaturation éthylénique, à température élevée, en présence de 0,1 à 10,0 % en poids d'amorceur, par rapport à la quantité des monomères silanés utilisés en totalité.

9. Utilisation des poly(alcool vinylique)s modifiés par un silane selon les revendications 1 à 7, en tant que liant ou co-liant pour des produits de revêtement et des adhésifs.

10. Utilisation selon la revendication 9, dans des couchages de papier.

11. Utilisation des poly(alcool vinylique)s modifiés par un silane selon les revendications 1 à 7, en tant que colloïdes protecteurs pour dispersions aqueuses, dans la polymérisation en milieu aqueux et dans la préparation de poudres de dispersions redispersables dans l'eau.

12. Utilisation des poly(alcool vinylique)s modifiés par un silane selon les revendications 1 à 7, pour le traitement de pigments et de charges et en tant que liant dans l'industrie de la céramique.

13. Utilisation des poly(alcool vinylique)s modifiés par un silane selon les revendications 1 à 7, en cosmétique, ainsi qu'en tant que liant dans le conditionnement de produits alimentaires et l'industrie textile.
